# EUROPEAN PATENT APPLICATION

(11) **EP 4 385 860 A1**
(43) Date of publication of application: **19.06.2024**
(21) Application number: 22914917.4
(22) Date of filing: 28.12.2022
(51) Int. Cl.: B62D 25/08

(54) **VEHICLE BODY STRUCTURE AND VEHICLE HAVING SAME**

(30) Priority: 31.12.2021 CN 202111675535
(71) Applicant: BYD Company Limited, Shenzhen, Guangdong 518118 (CN)
(72) Inventor: LIU, Tengyong, Shenzhen Guangdong 518118 (CN); YI, Bengang, Shenzhen Guangdong 518118 (CN); YAN, Junfei, Shenzhen Guangdong 518118 (CN); QUAN, Yi, Shenzhen Guangdong 518118 (CN); ZHENG, Rilong, Shenzhen Guangdong 518118 (CN)
(74) Representative: Dehns Germany Partnerschaft mbB
(86) International application number: PCT/CN2022/142835
(87) International publication number: WO 2023/125665

(57) **Abstract**

A vehicle body structure and a vehicle having the same are provided. The vehicle body structure includes: a front crossbeam upper plate; a cowl panel, at least a portion of the cowl panel being disposed on a rear side of the front crossbeam upper plate; and a front crossbeam lower plate, at least a portion of the front crossbeam lower plate being disposed below the front crossbeam upper plate and the cowl panel. The front crossbeam lower plate, the front crossbeam upper plate, and the cowl panel cooperate to define a first cavity. The front crossbeam lower plate, the front crossbeam upper plate, and a portion that is in the cowl panel and that constitutes the first cavity cooperate to form a front crossbeam.

## Description

### CROSS-REFERENCE TO RELATED APPLICATIONS

The present disclosure claims priority to Chinese Patent Application No. 202111675535.5, filed on December 31, 2021 and entitled "VEHICLE BODY STRUCTURE AND VEHICLE HAVING SAME", which is incorporated herein by reference in its entirety.

### FIELD

The present disclosure relates to a vehicle body structure and a vehicle having the same.

### BACKGROUND

In the development process of new energy vehicles, vehicle collision safety has become particularly important. Frontal impact testing has become one of important evaluation criteria for structural rationality of a front compartment of a vehicle. To protect safety of a passenger in a passenger compartment during a frontal collision, energy of the frontal collision is absorbed through deformation of a frontal structure before reaching the front end of the cowl panel. If too much energy remains and is directly transferred to the cowl panel, the cowl panel will be deformed and penetrate into the passenger compartment, threatening safety of the passenger.

### SUMMARY

The present disclosure provides a new technical solution of a vehicle body structure, so that at least one technical problem in the background can be resolved.

The present disclosure provides a new technical solution of a vehicle, including the foregoing vehicle body structure.

A vehicle body structure provided in the present disclosure includes: a front crossbeam upper plate; a cowl panel, at least a portion of the cowl panel being disposed on a rear side of the front crossbeam upper plate; and a front crossbeam lower plate, at least a portion of the front crossbeam lower plate being disposed below the front crossbeam upper plate and the cowl panel, where the front crossbeam lower plate, the front crossbeam upper plate, and the cowl panel cooperate to define a first cavity, and the front crossbeam lower plate, the front crossbeam upper plate, and a portion that is in the cowl panel and that constitutes the first cavity cooperate to form a front crossbeam.

Optionally, the vehicle body structure further includes a central channel extending in a front-rear direction of the vehicle body, the central channel is connected to the cowl panel, and a connection location between the central channel and the cowl panel is disposed opposite to the first cavity.

Optionally, the connection location between the central channel and the cowl panel corresponds to a middle location in the first cavity in an up-down direction of the vehicle body.

Optionally, the vehicle body structure further includes: a front longitudinal beam, the front longitudinal beam including a left front longitudinal beam and a right front longitudinal beam spaced apart along a left-right direction of the vehicle body, an end portion connected to the left front longitudinal beam and an end portion connected to the right front longitudinal beam being respectively disposed at a location in the first cavity which is close to the left front longitudinal beam and at a location in the first cavity which is close to the right front longitudinal beam, and the locations of the two end portions in the front-rear direction being located in front of an intermediate portion of the first cavity, where the intermediate portion of the first cavity is an intermediate portion of the first cavity in the left-right direction of the vehicle body.

Optionally, the end portions include a left end portion and a right end portion spaced apart along the left-right direction of the vehicle body, the left end portion is connected to the left front longitudinal beam, and the right end portion is connected to the right front longitudinal beam.

Optionally, the two end portions are disposed opposite to each other, and the two end portions and the intermediate portion of the first cavity form a V-shaped structure.

Optionally, a cross-section area of the intermediate portion of the first cavity is less than a cross-section area of the end portion, where the cross-section area is a cross-section area of the first cavity along the up-down direction of the vehicle body.

Optionally, the cross-section area of the intermediate portion of the first cavity is 0.5 to 0.8 times the cross-section area of the end portion.

Optionally, along a direction from the intermediate portion of the first cavity towards the two end portions, a cross-section area of the first cavity gradually increases.

Optionally, the vehicle body structure further includes: a bracing plate, the bracing plate being disposed at the intermediate portion of the first cavity, to strengthen a structure of the front crossbeam.

Optionally, the front crossbeam lower plate and the cowl panel cooperate to define a second cavity.

Optionally, at least a portion of a lower side surface of the front crossbeam lower plate is parallel to a bottom surface of the vehicle body.

Optionally, the vehicle body structure further includes: a mounting portion, the mounting portion being disposed on a lower side of the front crossbeam lower plate and between the left front longitudinal beam and the right front longitudinal beam, and the mounting portion being configured for mounting a front subframe.

Optionally, the vehicle body structure further includes: a left reinforcing plate and a right reinforcing plate, the left reinforcing plate and the right reinforcing plate being respectively located at locations that are on the front crossbeam lower plate and that are corresponding to the left front longitudinal beam and the right front longitudinal beam, and the left reinforcing plate and the right reinforcing plate respectively cooperating with the front crossbeam lower plate to form a third cavity.

Optionally, the front longitudinal beam includes a front longitudinal beam rear section, the front longitudinal beam rear section is connected to a sill beam, and the front longitudinal beam rear section includes a longitudinal beam connection plate and a longitudinal beam sealing plate connection plate, the longitudinal beam connection plate and the longitudinal beam sealing plate connection plate cooperating to form a fourth cavity and a fifth cavity, the fourth cavity extending from the front longitudinal beam towards a front end of a sill, and the fifth cavity extending from the front longitudinal beam towards an intermediate portion of an A-pillar of the vehicle body in the up-down direction.

Optionally, the front longitudinal beam rear section includes a left front longitudinal beam rear section and a right front longitudinal beam rear section, the left front longitudinal beam rear section is connected to the left end portion, and the right front longitudinal beam rear section is connected to the right end portion.

The present disclosure provides a vehicle, including the vehicle body structure according to any one of the foregoing embodiments.

According to an embodiment of the present disclosure, the front crossbeam lower plate, the front crossbeam upper plate, and the cowl panel cooperate to form the first cavity, and the first cavity has a force transferring function. When a front side of the vehicle body is subjected to collision force, the collision force on the front side may be transferred from to rear structure through the first cavity, thereby preventing the direct transfer of too much energy to the cowl panel to cause the cowl panel to deform and penetrate into a passenger compartment to threaten passenger safety.

Other features and advantages of the present disclosure will become apparent based on the following detailed descriptions of exemplary embodiments of the present disclosure with reference to the accompanying drawings.

### BRIEF DESCRIPTION OF THE DRAWINGS

Accompanying drawings are incorporated into and constitute a part of this specification, show embodiments of the present disclosure, and are used together with this specification to describe the principle of the present disclosure.
FIG. 1 is a bottom view of a vehicle body structure according to an embodiment of the present disclosure;
FIG. 2 is a cross-sectional view along an E-E direction in FIG. 1;
FIG. 3 is a partial enlarged view of a cross-sectional view in an E-E direction at a location close to a cowl panel;
FIG. 4 is a bottom perspective view of a vehicle body structure according to an embodiment of the present disclosure;
FIG. 5 is a cross-sectional view along an F-F direction in FIG. 1;
FIG. 6 is a bottom view of a partial structure of a vehicle body structure according to an embodiment of the present disclosure; and
FIG. 7 is an exploded view of the vehicle body structure in FIG. 6.

### Reference numerals:

vehicle body structure 100;
left front longitudinal beam 1, left front longitudinal beam rear section 1a; right front longitudinal beam 1';
left front longitudinal beam sealing plate 2; right front longitudinal beam sealing plate 2';
cowl panel front crossbeam 6; left end portion cavity 6a; intermediate portion cavity 6b;
left sill 9; right sill 9';
left front longitudinal beam sealing plate front crossbeam lower plate 11; right front longitudinal beam sealing plate front crossbeam lower plate 11';
left front longitudinal beam front crossbeam lower plate 12; right front longitudinal beam front crossbeam lower plate 12';
front crossbeam lower plate 13; front crossbeam lower plate lower bottom surface 13a; front crossbeam lower plate upper facade 13b; front crossbeam lower plate intermediate surface 13c;
cowl panel lower section 14; cowl panel lower bottom surface 14a; cowl panel lower section upper facade 14b; cowl panel lower section intermediate surface 14c;
sealing plate assembly 15;
central channel 16; central channel upper facade 16b;
front crossbeam upper plate 17; front crossbeam upper plate lower facade 17a; front crossbeam upper plate upper facade 17b;
cowl panel upper section 18;
left front subframe mounting point 19; right front subframe mounting point 19';
left outer bracing plate 20; left inner bracing plate 21; right outer bracing plate 20'; right inner bracing plate 21'; intermediate portion bracing plate 22;
cowl panel lower section left reinforcing plate 23; cowl panel lower section right reinforcing plate 23';
second cavity A; first cavity B; third cavity C; fourth cavity D; and fifth cavity E.

### DETAILED DESCRIPTION

Various exemplary embodiments of the present disclosure are now described in detail with reference to the accompanying drawings. It should be noted that unless otherwise specified, opposite arrangement, numerical expressions, and numerical values of components and steps described in the embodiments do not limit the scope of the present disclosure.

The following descriptions of at least one exemplary embodiment are merely illustrative, and in no way constitute any limitation on the present disclosure and application or use of the present disclosure.

Technologies, methods, and devices known to those of ordinary skill in related arts may not be discussed in detail, but where appropriate, the techniques, the methods, and the devices should be considered as a part of the specification.

In all examples shown and discussed herein, any specific value should be construed as merely exemplary and not as limitations. Therefore, other examples of exemplary embodiments may have different values.

It should be noted that similar numerals and letters refer to similar items in the following accompanying drawings, and therefore, once an item is defined in a figure, further discussion is not required for the item in subsequent accompanying drawings.

A vehicle body structure 100 in embodiments of the present disclosure is described below in detail with reference to the accompanying drawings.

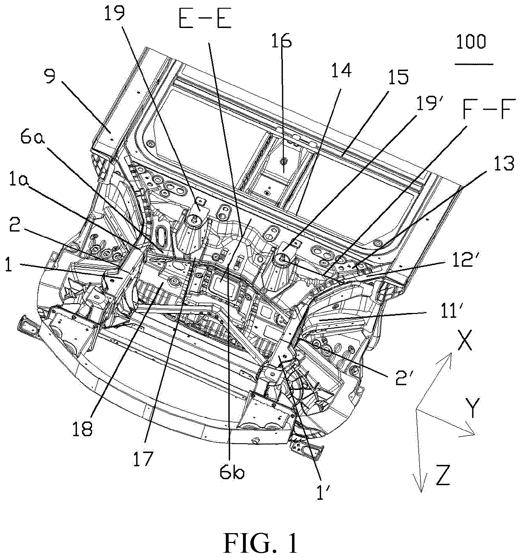

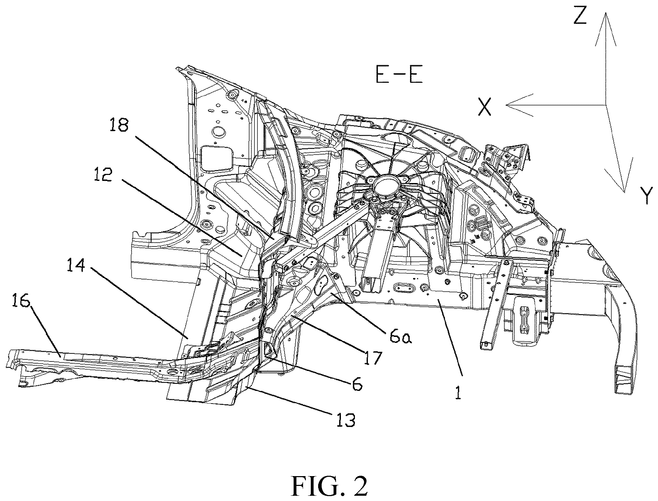

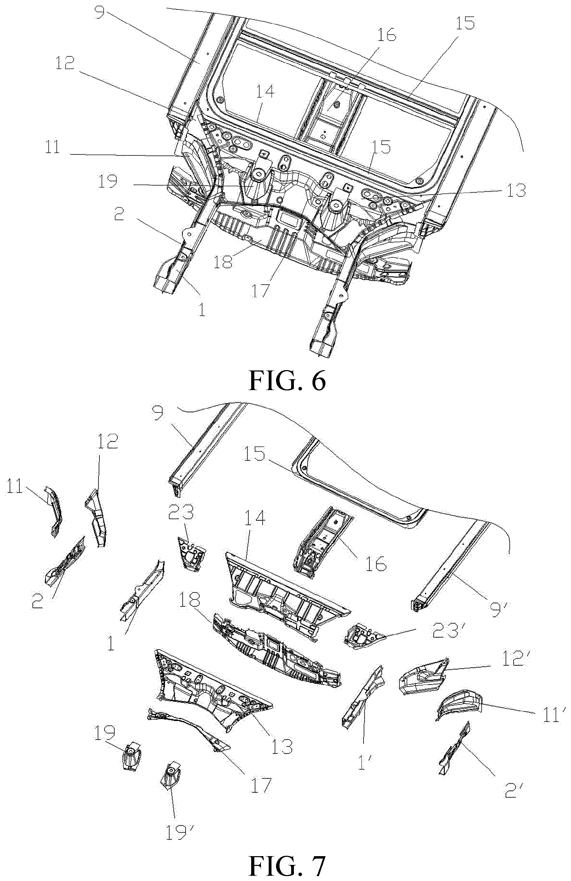

As shown in FIG. 1 to FIG. 7, the vehicle body structure 100 according to the embodiments of the present disclosure includes a front crossbeam upper plate 17, a cowl panel, and a front crossbeam lower plate 13.

Specifically, at least a portion of the cowl panel is disposed on a rear side of the front crossbeam upper plate 17, and at least a portion of the front crossbeam lower plate 13 is disposed below the front crossbeam upper plate 17 and the cowl panel.

The front crossbeam lower plate 13, the front crossbeam upper plate 17, and the cowl panel cooperate to define a first cavity B, and the front crossbeam lower plate 13, the front crossbeam upper plate 17, and a portion that is in the cowl panel and that constitutes the first cavity B cooperate to form a front crossbeam.

That is, the vehicle body structure 100 according to this embodiment of the present disclosure includes the front crossbeam upper plate 17, the cowl panel, and the front crossbeam lower plate 13. With a front-rear direction of the vehicle body as a reference direction, a vehicle head is in the front, a vehicle back is in the rear, and at least a portion of the cowl panel can be located on a rear side of the front crossbeam upper plate 17. With an up-down direction of the vehicle body as a reference direction, a vehicle roof is an upper portion, a vehicle bottom is a lower portion, and at least a portion of the front crossbeam lower plate 13 can be located below the front crossbeam upper plate 17 and the cowl panel. For ease of description, a left-right direction of the vehicle body is defined as a Y-axis direction below, an up-down direction is defined as a Z-axis direction, and a front-rear direction is defined as an X-axis direction. That is, at least a portion of the cowl panel can be located on a rear side of the front crossbeam upper plate 17 in the X-axis direction. At least a portion of the front crossbeam lower plate 13 can be located both below the front crossbeam upper plate 17 in the Z-axis direction and below the cowl panel in the Z-axis direction.

The front crossbeam lower plate 13, the front crossbeam upper plate 17, and the cowl panel cooperate to define a first cavity B, and the first cavity B may be used as a imaginary front crossbeam 6 of the cowl panel. It should be noted that, the first cavity B may transfer collision force from the front of the vehicle body to a rear side of the vehicle body roughly along the X-axis direction. For example, the collision force is transferred to the central channel 16 and a rear structure on a rear side, that is, the first cavity B may be used as a force transferring structure to play a role of transferring the collision force.

In this embodiment, the front crossbeam lower plate 13, the front crossbeam upper plate 17 B, and the cowl panel cooperate to form the first cavity B, and the first cavity B has a force transferring function. When a front side of the vehicle body is subjected to the collision force, the collision force on the front side may be transferred from to rear structure through the first cavity B, thereby preventing the direct transfer of too much energy to the cowl panel to cause the cowl panel to deform and penetrate into a passenger compartment to threaten passenger safety.

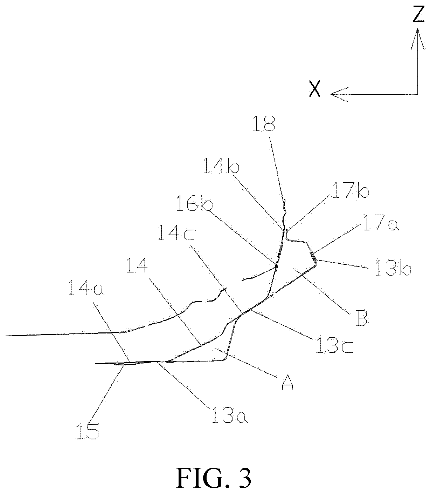

According to an embodiment of the present disclosure, as shown in FIG. 1 and FIG. 3, the vehicle body structure 100 further includes a central channel 16 extending along the front-rear direction of the vehicle body, the central channel 16 is connected to the cowl panel, and a connection location between the central channel 16 and the cowl panel is disposed opposite to the first cavity B. For example, the central channel 16 is connected to the cowl panel by a central channel upper facade 16b. Specifically, an intermediate portion of a floor panel protrudes upwards, so that the central channel 16 extending along the front-rear direction can be formed. There is a central channel upper facade 16b corresponding to the central channel 16 on the floor panel, the central channel upper facade 16b may be connected to the cowl panel, and a connection location between the central channel upper facade 16b and the cowl panel may be disposed opposite to the first cavity B. For example, when the cowl panel includes a cowl panel upper section and a cowl panel lower section 14, the central channel upper facade 16b overlaps the cowl panel lower section 14. In this embodiment, an overlapping location between the central channel upper facade 16b and the cowl panel is close to the first cavity B, which is more conducive to transferring collision force backwards to the central channel 16 and a rear structure through the first cavity B.

In some specific implementations of the present disclosure, the connection location between the central channel upper facade 16b and the cowl panel corresponds to a middle location in the first cavity B in the up-down direction of the vehicle body. That is, the connection location is close to a middle location in the first cavity B in the Z-axis direction. For example, the central channel upper facade 16b overlaps the cowl panel lower section 14, and an overlapping edge is disposed at the middle location in the first cavity B in the Z-axis direction.

In this embodiment, the connection location between the central channel upper facade 16b and the cowl panel is defined near the middle location in the first cavity B in the up-down direction, so that not only the collision force can be transferred to the central channel 16 and the rear structure through the first cavity B, but also disparity during transferring of the collision force rearwards can be avoided.

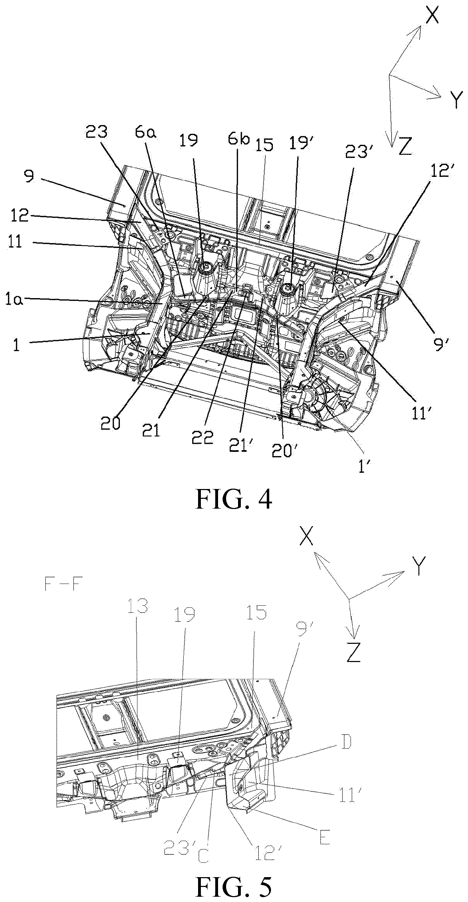

According to an embodiment of the present disclosure, as shown in FIG. 4, the vehicle body structure 100 further includes a left front longitudinal beam 1 and a right front longitudinal beam 1' spaced apart along the left-right direction of the vehicle body, an end portion connected to the left front longitudinal beam 1 and an end portion connected to the right front longitudinal beam 1' are respectively disposed at a location in the first cavity B which is close to the left front longitudinal beam 1 and at a location in the first cavity B which is close to the right front longitudinal beam 1', and the locations of the two end portions in the front-rear direction are located in front of the intermediate portion of the first cavity B. The intermediate portion of the first cavity B is an intermediate portion of the first cavity B in the left-right direction of the vehicle body.

That is, the vehicle body structure 100 in this embodiment may further include a front longitudinal beam, and the front longitudinal beam may be connected to the front crossbeam lower plate 13. For example, the front longitudinal beam is located in front of the front crossbeam lower plate 13, and a front longitudinal beam rear section overlaps the front crossbeam lower plate 13. Along the left-right direction, the front longitudinal beam may be divided into the left front longitudinal beam 1 and the right front longitudinal beam 1'. The left front longitudinal beam 1 and the right front longitudinal beam 1' may be spaced apart along the left-right direction. The front crossbeam lower plate 13 may be located between the left front longitudinal beam 1 and the right front longitudinal beam 1', and the left front longitudinal beam rear section 1 is located at a connection location between the left front longitudinal beam 1 and the cowl panel, and the right front longitudinal beam rear section 1' is located at a connection location between the right front longitudinal beam 1' and the cowl panel. The front crossbeam lower plate 13 cooperates with the front longitudinal beam, so that stability of a connection structure can be implemented, thereby facilitating transferring collision force received by the front longitudinal beam to the first cavity B.

The first cavity B may be disposed between the left front longitudinal beam 1 and the right front longitudinal beam 1'. When the left front longitudinal beam 1 and the right front longitudinal beam 1' transfer the collision force backwards, the collision force may be transferred backwards to the central channel 16 and the rear structure through the first cavity B.

According to an embodiment of the present disclosure, the end portions include a left end portion and a right end portion spaced apart along the left-right direction of the vehicle body, the left end portion is connected to the left front longitudinal beam 1, and the right end portion is connected to the right front longitudinal beam 1'. That is, the first cavity B has a left end portion, an intermediate portion, and a right end portion in sequence along the left-right direction. The left end portion is close to the left front longitudinal beam 1, and the right end portion is close to the right front longitudinal beam 1'. The intermediate portion herein may refer to an intermediate portion of the entire vehicle along the left-right direction, that is, a location of an intermediate portion along the Y-axis direction of the entire vehicle. For ease of description, the first cavity B may be divided into a left end portion cavity 6a, an intermediate portion cavity 6b, and a right end portion cavity in sequence along the Y-axis direction. The left end portion cavity 6a may be located on a left side of the intermediate portion cavity 6b, the right end portion cavity may be located on a right side of the intermediate portion cavity 6b, and the intermediate portion cavity 6b may respectively communicate with the left end portion cavity 6a and the right end portion cavity respectively.

In some specific implementations of the present disclosure, as shown in FIG. 4, the two end portions are disposed opposite to each other, and the two end portions and the intermediate portion of the first cavity B form a V-shaped structure. That is, along a direction from a connection location between the front crossbeam upper plate 17 and the front longitudinal beam to the location of the intermediate portion in the left-right direction, the front crossbeam gradually tilts towards the intermediate from both sides, to form a V-shaped structure, so that a better force transferring effect can be implemented. When the location of the intermediate portion of the first cavity B corresponds to the location of the central channel 16 in the front-rear direction, at least part of the collision force received by the front longitudinal beam can be transferred to the central channel 16 through the first cavity B.

In some specific implementations of the present disclosure, a cross-section area of the intermediate portion of the first cavity B is less than a cross-section area of the end portion, where the cross-section area is a cross-section area of the first cavity B along the up-down direction of the vehicle body. That is, a portion that is in the first cavity B and that is relatively close to the front longitudinal beam has a larger cross-section area, and an intermediate portion that is in the first cavity B and that is relatively close to the middle location in the left-right direction has a smaller cross-section area. That is, the intermediate portion cavity 6b is smaller, the left end portion cavity 6a and the right end portion cavity are larger.

When the left front longitudinal beam 1 transfers the collision force from the front, a connection location between the left front longitudinal beam rear section 1 and the cowl panel or a root may transfer the force to the left end portion cavity 6a, the left end portion cavity 6a transfers the force to the intermediate portion cavity 6b, which can guide the collision force. Similarly, the right front longitudinal beam 1' can also transfer force to the intermediate portion cavity 6b through the right end portion cavity, which can also guide the collision force. Details are not described herein.

In this embodiment, the cross-section area of the intermediate portion of the first cavity B is defined to be less than the cross-section area of the end portion, and a change in the cross-sectional area may be implemented, so that collision force transferred due to a head-on collision can be guided relatively smoothly, to avoid an abrupt change point in the front longitudinal beam rear section.

According to an embodiment of the present disclosure, the cross-section area of the intermediate portion of the first cavity is 0.5 times to 0.8 times the cross-section area of the end portion, and end point values may be included. For example, the cross-section area of the intermediate portion is 0.50 times, 0.55 times, 0.56 times, 0.6 times, 0.7 times, or 0.8 times the cross-section area of the end portion. When the cross-section area of the intermediate portion is 0.5 times smaller than the cross-section area of the end portion, it is difficult for the collision force to be transferred to the central channel 16 or the rear structure, which becomes a weak point of the structure. When the cross-section area of the intermediate portion of the first cavity B is 0.8 times larger than the cross-section area of the end portion, a difference between the cross-section area of the intermediate portion and the cross-section area of the end portion is relatively small, and an abrupt change point is likely to occur in the front longitudinal beam rear section.

In some specific implementations of the present disclosure, along a direction from the intermediate portion of the first cavity B towards the two end portions, the cross-section area of the first cavity B gradually increases. That is, along the direction from the intermediate portion to the end portion, the cross-section area of the first cavity B gradually increases, and the intermediate portion cavity that is in the first cavity B and that is in the Y-axis direction of the vehicle body is relatively small, and the first cavity B gradually grows larger from the intermediate portion in the Y-axis direction to the left front longitudinal beam 1 and the right front longitudinal beam 1' on both sides of the Y-axis direction, so that smoothness of guiding the collision force can be further improved.

According to an embodiment of the present disclosure, the vehicle body structure 100 further includes a bracing plate, and the bracing plate is disposed at the intermediate portion of the first cavity B, to strengthen a structure of the front crossbeam. That is, the bracing plate is disposed in the first cavity B, and the bracing plate can play a supporting role, thereby helping ensure structural integrity of the first cavity B. When the bracing plate is located at the intermediate portion of the first cavity B, the bracing plate may be defined as an intermediate portion bracing plate 22, that is, when the cross-section area of the intermediate portion of the first cavity B is relatively small, the bracing plate is disposed, so that stiffness of the first cavity B can be ensured.

According to an embodiment of the present disclosure, the front crossbeam lower plate 13 is separately connected to the front crossbeam upper plate 17 and the cowl panel through tailor welding. That is, the first cavity B may be formed by performing tailor welding on the front crossbeam lower plate 13, the front crossbeam upper plate 17, and the cowl panel.

According to an embodiment of the present disclosure, the front crossbeam upper plate 17 may be roughly L-shaped, one side of the front crossbeam upper plate 17 may be spliced with the front crossbeam lower plate 13, and the other side of the front crossbeam upper plate 17 may be spliced with the cowl panel. The front crossbeam lower plate 13 may alternatively be roughly L-shaped, and the front crossbeam upper plate 17 and the front crossbeam lower plate 13 may be spliced at an intermediate portion location of the left front longitudinal beam 1 and the right front longitudinal beam 1 ' along a Z-axis direction.

Optionally, along the front-rear direction, the front crossbeam lower plate 13 has a front crossbeam lower plate upper facade 13b and a front crossbeam lower plate intermediate surface 13c that are connected to each other. The front crossbeam upper plate 17 has a front crossbeam upper plate lower facade 17a and a front crossbeam upper plate upper facade 17b, the cowl panel has a cowl panel lower section 14 and a cowl panel upper section 18, and the cowl panel lower section 14 has a cowl panel lower section upper facade 14b and a cowl panel lower section intermediate surface 14c. The first cavity B may be formed by performing tailor welding on the front crossbeam lower plate 13, the front crossbeam upper plate 17, and the cowl panel lower section 14. In this embodiment, the mounting process can be simplified by the overlapping method.

The front crossbeam lower plate upper facade 13b is located in front of the front crossbeam lower plate intermediate surface 13c, the cowl panel lower section upper facade 14b is located in front of the cowl panel lower section intermediate surface 14c, the front crossbeam upper plate lower facade 17a can overlap an upper seam allowance of the cowl panel lower section 14, the front crossbeam upper plate upper facade 17b can overlap the front crossbeam lower plate upper facade 13b, and the front crossbeam lower plate intermediate surface 13c may overlap the cowl panel lower section intermediate surface 14c, thereby forming the first cavity B.

According to an embodiment of the present disclosure, as shown in FIG. 3, the front crossbeam lower plate 13 and the cowl panel cooperate to define a second cavity A. The second cavity A may be located above the cowl panel and in front of a floor. Specifically, the front crossbeam lower plate 13 may extend to a rear portion of the vehicle body until a front portion of a front floor. The front portion of the front floor and the cowl panel lower section may form a second cavity A structure. The second cavity A structure may be located on a front side of a battery pack under the floor of the vehicle body and can provide a front mounting point for the battery pack. The second cavity A may be equivalent to a front mounting crossbeam of a battery pack in a conventional vehicle.

The front crossbeam lower plate 13 may extend towards a location of a rear sealing plate assembly 15, the sealing plate assembly 15 in the present disclosure may include a battery pack sealing plate, and the battery pack sealing plate may be disposed on a front floor of the conventional vehicle. The front crossbeam lower plate 13 further has a front crossbeam lower plate lower bottom surface 13a, and the front crossbeam lower plate lower bottom surface 13a is located behind a front crossbeam lower plate intermediate surface 13c. The cowl panel further has a cowl panel lower bottom surface 14a, and the cowl panel lower bottom surface 14a overlaps the front crossbeam lower plate lower bottom surface 13a, and the front crossbeam lower plate intermediate surface 13c overlaps a cowl panel lower section intermediate surface 14c, so that the second cavity A is formed below the cowl panel (in front of the floor). The second cavity A may be equivalent to the front mounting crossbeam of the battery pack in the conventional vehicle. A cross section of the second cavity A along a width direction of the vehicle may be triangle-like.

It should be noted that, the second cavity A may be located on the front side of the battery pack under the floor of the vehicle and may provide a front mounting point for the battery pack, that is, the second cavity A has a function of the front mounting crossbeam of the battery pack.

According to an embodiment of the present disclosure, a lower side surface of at least a portion of the front crossbeam lower plate 13 is parallel to a bottom surface of the vehicle body, which is beneficial to transferring the collision force on the front side to a rear side structure, for example, transferring the collision force to the central channel 16.

In some specific implementations of the present disclosure, the vehicle body structure 100 further includes a mounting portion. The mounting portion is disposed on a lower side of the front crossbeam lower plate 13 and between the left front longitudinal beam 1 and the right front longitudinal beam 1', and the mounting portion is configured for mounting a front subframe. That is, the mounting portion is designed below the front crossbeam upper plate 17 and between the left front longitudinal beam 1 and the right front longitudinal beam 1', so that the front subframe can be mounted.

According to an embodiment of the present disclosure, as shown in FIG. 4, the mounting portion includes a left front subframe mounting point 19 and a right front subframe mounting point 19'. For example, below the front crossbeam lower plate 13 and between the left front longitudinal beam 1 and the right front longitudinal beam 1', an integrated left front subframe mounting point 19 and an integrated right front subframe mounting point 19' are designed.

In some specific implementations of the present disclosure, there may be multiple bracing plates. Multiple bracing plate structures are disposed inside the first cavity B, so that structural integrity of the first cavity B can be ensured. A left inner bracing plate 21 is disposed at a location corresponding to an inner side of the left front subframe mounting point 19, a left outer bracing plate 20 is disposed at an outer location, and two bracing plates that are a right inner bracing plate 21' and a right outer bracing plate 20' are disposed at a location corresponding to the corresponding right front subframe mounting point 19'. When the front subframe is subjected to a collision load caused by a frontal collision, a side surface collision, or the like of the entire vehicle, the collision force may be dispersed and transferred through the bracing plate below the mounting point.

According to an embodiment of the present disclosure, the vehicle body structure 100 further includes a left reinforcing plate and a right reinforcing plate. The left reinforcing plate and the right reinforcing plate are respectively located at locations that are on the front crossbeam lower plate 13 and that are corresponding to the left front longitudinal beam 1 and the right front longitudinal beam 1', and the left reinforcing plate and the right reinforcing plate respectively cooperate with the front crossbeam lower plate 13 to form a third cavity C.

That is, the vehicle body structure 100 further includes the left reinforcing plate and the right reinforcing plate, the left reinforcing plate and the right reinforcing plate may be respectively located at the end portions of the first cavity B, and the left reinforcing plate and the right reinforcing plate are spaced apart along the left-right direction. As shown in FIG. 4, the left reinforcing plate may be defined as a cowl panel lower section left reinforcing plate 23 and is close to the left front longitudinal beam 1, and the right reinforcing plate may be defined as a cowl panel lower section right reinforcing plate 23' and is close to the right front longitudinal beam 1', and the left reinforcing plate and the right reinforcing plate separately cooperate with the front crossbeam upper plate 17 to form the third cavity C. That is, the left reinforcing plate and the front crossbeam upper plate 17 cooperate to form the third cavity C, and the right reinforcing plate and the front crossbeam upper plate 17 also cooperate to form the third cavity C.

That is, the front crossbeam lower plate 13 disposed behind the left front longitudinal beam 1 may be equivalent to a longitudinal beam rear section outer connection plate of the conventional vehicle. The front crossbeam lower plate 13, the front crossbeam upper plate 17, and the cowl panel lower section 14 may form a force transferring structure with the first cavity B. In addition, the cowl panel lower section left reinforcing plate 23 and the cowl panel lower section right reinforcing plate 23' are further disposed inside the first cavity B. The left reinforcing plate, the right reinforcing plate, and the front crossbeam lower plate 13 may cooperate to form the third cavity C.

In this embodiment, the front crossbeam lower plate 13 may be equivalent to a front longitudinal beam rear section of the conventional vehicle. At a location of an original front longitudinal beam rear section, in the present disclosure, the left reinforcing plate and the right reinforcing plate are disposed to enhance a force transferring effect of the first cavity B, that is, the front crossbeam lower plate 13 in this embodiment may transfer, through the first cavity B, frontal collision force on the vehicle in a direction from the front longitudinal beam to a sill.

According to an embodiment of the present disclosure, the front longitudinal beam includes a front longitudinal beam rear section, the front longitudinal beam rear section is connected to a sill beam, and the front longitudinal beam rear section includes a longitudinal beam connection plate and a longitudinal beam sealing plate connection plate. The longitudinal beam connection plate and the longitudinal beam sealing plate connection plate cooperate to form a fourth cavity D and a fifth cavity E, the fourth cavity D extends from the front longitudinal beam towards a front end of the sill, and the fifth cavity E extends from the front longitudinal beam towards an intermediate portion of an A-pillar of the vehicle body in the up-down direction of the vehicle body.

The longitudinal beam sealing plate may include a left front longitudinal beam sealing plate 2 and a right front longitudinal beam sealing plate 2' spaced apart along the left-right direction, and the left front longitudinal beam sealing plate 2 is disposed on a side of the left front longitudinal beam 1 close to a left sill 9, and the right front longitudinal beam sealing plate 2' is disposed on a side of the right front longitudinal beam 1' close to a right sill 9'. The longitudinal beam connection plate may be divided into a left front longitudinal beam connection plate 12 and the right front longitudinal beam connection plate 12'. The left front longitudinal beam connection plate 12 may be located behind the left front longitudinal beam sealing plate 2, and the right front longitudinal beam connection plate 12 may be located behind the right front longitudinal beam sealing plate 2'. The longitudinal beam sealing plate connection plate may be divided into a left front longitudinal beam sealing plate connection plate 11 and the right front longitudinal beam sealing plate connection plate 11'.

That is, a sealing plate rear section connected to the A-pillar of the vehicle body is disposed behind the left front longitudinal beam sealing plate 2 and the right front longitudinal beam sealing plate 2', and the sealing plate rear section may be of a structure with two cavities: an upper cavity and a lower cavity. Correspondingly, a longitudinal beam connection plate connected to the A-pillar is also disposed behind the left front longitudinal beam 1 and the right front longitudinal beam 1'. The longitudinal beam connection plate is also disposed as a structure with two cavities: an upper cavity and a lower cavity. The above two cavities correspond one to one and cooperate to form the fourth cavity D and the fifth cavity E distributed up and down. The fourth cavity D may be connected to the front end of the sill 9, and the fifth cavity E may extend to an intermediate portion of the A-pillar along the Z-axis direction. A collision load received by the left front longitudinal beam and the right front longitudinal beam may be transferred to the A-pillar and the sill through the fourth cavity D and the fifth cavity E, thereby ensuring passenger safety in a passenger compartment.

In this embodiment, specific extension directions of the fourth cavity D and the fifth cavity E are defined. This can help guide collision force, increase efficiency of transferring the collision load to the sill and the A-pillar, and further improves safety performance.

Optionally, as shown in FIG. 5, the longitudinal beam connection plate and the sealing plate connection plate may be separately formed into an "M"-like structure. During assembly, the connection plate and the sealing plate connection plate may be disposed opposite to each other, which is conducive to rapid formation of the fourth cavity D and the fifth cavity E.

According to an embodiment of the present disclosure, the front longitudinal beam rear section includes a left front longitudinal beam rear section 1a and a right front longitudinal beam rear section, the left front longitudinal beam rear section 1a is connected to the left end portion, and the right front longitudinal beam rear section is connected to the right end portion. The front longitudinal beam rear section may overlap the front crossbeam lower plate 13, and the left front longitudinal beam rear section 1 a may be close to the connection location between the left front longitudinal beam and the cowl panel. The front longitudinal beam is connected to the end portion, which is conducive to transferring force to the first cavity B by the connection location between the front longitudinal beam rear section and the cowl panel or the root.

To sum up, the vehicle body structure 100 according to this embodiment of the present disclosure may cooperate with a surrounding structure through the front crossbeam upper plate 17, so that the vehicle body structure 100 can have functions of the cowl panel front crossbeam 6, the front mounting crossbeam of the battery pack, and the like.

An embodiment of the present disclosure further provides a vehicle, where the vehicle includes the vehicle body structure 100 according to any one of the above embodiments. Because the vehicle body structure 100 according to this embodiment of the present disclosure improves safety performance, the vehicle according to this embodiment of the present disclosure also has the above advantages. Details are not described herein.

Although some specific embodiments of the present disclosure have been described in detail by way of examples, a person skilled in the art should understand that the foregoing examples are only for description and are not intended to limit the scope of the present disclosure. A person skilled in the art should appreciate that modifications may be made to the foregoing embodiments without departing from the scope and spirit of the present disclosure. The scope of the present disclosure is limited only by the appended claims.

## Claims

1. A vehicle body structure, comprising:
a front crossbeam upper plate;
a cowl panel, at least a portion of the cowl panel being disposed on a rear side of the front crossbeam upper plate; and
a front crossbeam lower plate, at least a portion of the front crossbeam lower plate being disposed below the front crossbeam upper plate and the cowl panel,
wherein the front crossbeam lower plate, the front crossbeam upper plate, and the cowl panel cooperate to define a first cavity, and the front crossbeam lower plate, the front crossbeam upper plate, and a portion that is in the cowl panel and that constitutes the first cavity cooperate to form a front crossbeam.

2. The vehicle body structure according to claim 1, further comprising a central channel extending in a front-rear direction of the vehicle body, the central channel being connected to the cowl panel, and a connection location between the central channel and the cowl panel being disposed opposite to the first cavity.

3. The vehicle body structure according to claim 1 or 2, wherein the connection location between the central channel and the cowl panel corresponds to a middle location in the first cavity in an up-down direction of the vehicle body.

4. The vehicle body structure according to any one of claims 1 to 3, further comprising:
a front longitudinal beam, the front longitudinal beam comprising a left front longitudinal beam and a right front longitudinal beam spaced apart along a left-right direction of the vehicle body, an end portion connected to the left front longitudinal beam and an end portion connected to the right front longitudinal beam being respectively disposed at a location in the first cavity which is close to the left front longitudinal beam and at a location in the first cavity which is close to the right front longitudinal beam, and the locations of the two end portions in the front-rear direction being located in front of an intermediate portion of the first cavity, wherein the intermediate portion of the first cavity is an intermediate portion of the first cavity in the left-right direction of the vehicle body.

5. The vehicle body structure according to any one of claims 1 to 4, wherein the end portions comprise a left end portion and a right end portion spaced apart along the left-right direction of the vehicle body, the left end portion is connected to the left front longitudinal beam, and the right end portion is connected to the right front longitudinal beam.

6. The vehicle body structure according to any one of claims 1 to 5, wherein the two end portions are disposed opposite to each other, and the two end portions and the intermediate portion of the first cavity form a V-shaped structure.

7. The vehicle body structure according to any one of claims 1 to 6, wherein a cross-section area of the intermediate portion of the first cavity is less than a cross-section area of the end portion, wherein the cross-section area is a cross-section area of the first cavity along the up-down direction of the vehicle body.

8. The vehicle body structure according to any one of claims 1 to 7, wherein the cross-section area of the intermediate portion of the first cavity is 0.5 to 0.8 times the cross-section area of the end portion.

9. The vehicle body structure according to any one of claims 1 to 8, wherein along a direction from the intermediate portion of the first cavity towards the two end portions, a cross-section area of the first cavity gradually increases.

10. The vehicle body structure according to any one of claims 1 to 9, further comprising:
a bracing plate, the bracing plate being disposed at the intermediate portion of the first cavity, to strengthen a structure of the front crossbeam.

11. The vehicle body structure according to any one of claims 1 to 10, wherein the front crossbeam lower plate and the cowl panel cooperate to define a second cavity.

12. The vehicle body structure according to any one of claims 1 to 11, wherein at least a portion of a lower side surface of the front crossbeam lower plate is parallel to a bottom surface of the vehicle body.

13. The vehicle body structure according to any one of claims 1 to 12, further comprising:
a mounting portion, the mounting portion being disposed on a lower side of the front crossbeam lower plate and between the left front longitudinal beam and the right front longitudinal beam, and the mounting portion being configured for mounting a front subframe.

14. The vehicle body structure according to any one of claims 1 to 13, further comprising:
a left reinforcing plate and a right reinforcing plate, the left reinforcing plate and the right reinforcing plate being respectively located at locations that are on the front crossbeam lower plate and that are corresponding to the left front longitudinal beam and the right front longitudinal beam, and the left reinforcing plate and the right reinforcing plate respectively cooperating with the front crossbeam lower plate to form a third cavity.

15. The vehicle body structure according to any one of claims 1 to 14, wherein the front longitudinal beam comprises a front longitudinal beam rear section, the front longitudinal beam rear section is connected to a sill beam, and the front longitudinal beam rear section comprises a longitudinal beam connection plate and a longitudinal beam sealing plate connection plate, the longitudinal beam connection plate and the longitudinal beam sealing plate connection plate cooperating to form a fourth cavity and a fifth cavity, the fourth cavity extending from the front longitudinal beam towards a front end of a sill, and the fifth cavity extending from the front longitudinal beam towards an intermediate portion of an A-pillar of the vehicle body in the up-down direction.

16. The vehicle body structure according to any one of claims 1 to 15, wherein the front longitudinal beam rear section comprises a left front longitudinal beam rear section and a right front longitudinal beam rear section, the left front longitudinal beam rear section is connected to the left end portion, and the right front longitudinal beam rear section is connected to the right end portion.

17. A vehicle, comprising the vehicle body structure according to any one of claims 1 to 16.
